# EUROPEAN PATENT SPECIFICATION

(11) **EP 4 177 628 B1**
(45) Date of publication and mention of the grant of the patent: **21.08.2024**
(21) Application number: 21465560.7
(22) Date of filing: 05.11.2021
(51) Int. Cl.: G01S 7/40, G01S 13/931, G01S 15/931, G01S 7/497

(54) **METHOD FOR DETECTING FAST TOTAL BLOCKAGE OF A SENSOR**
VERFAHREN ZUR ERKENNUNG EINER SCHNELLEN TOTALBLOCKIERUNG EINES SENSORS
PROCÉDÉ DE DÉTECTION DE BLOCAGE TOTAL RAPIDE D'UN CAPTEUR

(43) Date of publication of application: 10.05.2023
(73) Proprietor: Continental Autonomous Mobility Germany GmbH, 85057 Ingolstadt (DE)
(72) Inventor: Popa, Mircea Ioan, 90411 Nürnberg (DE)
(74) Representative: Continental Corporation

(56) References cited:
- DE-A1- 102015 207 318
- DE-A1- 19 945 268

## Description

### Prior art

It is common that automotive radar systems integrate algorithms for diagnosis, radar performance evaluation and blockage detection in order to disable automatic driving assistance system functions (e.g. Automatic Cruise Control) in case of hardware or software sensor malfunctions. In case a radar radome is covered by ice or mud, or due to heavy rain, the radar signal can be highly attenuated. The blockage detection algorithms have the purpose to monitor the radar system detection capabilities and to determine if the system is able to detect and track objects consistently in the operating range. The blockage algorithms result is the blockage status, typically represented with Boolean logic.

For example, WO 2008/074314 A1 proposes a method for blockage detection by combining multiple statistical indicators in an overall blockage probability and confidence, which then are mapped over a blockage state variable with four possible outputs.

DE 10 2015 207 318 A1 describes an occlusion detecting method for a stationary radar system comprising a sensor which monitors a danger area to be observed in cycles. Furthermore, stationary objects were detected and deposited in a list. The detecting and depositing being performed when there are neither occlusions between the sensor and a danger area nor objects inside the danger area. The deposited objects are searched in each cycle, wherein an occlusion between the sensor and the danger area is detected if one of the deposited stationary objects is not found.

However, in case the blockage of the sensor happens in a very short time, prior art algorithms can take up to 120 seconds to confirm the blockage state, as they are built mostly on statistical methods and the statistical methods need large amounts of observed data to confirm the change in the damping conditions.

### Summary of the invention

It is therefore an objective to shorten the reaction time of methods for blockage detection of sensors.

This objective is solved by a method for detecting a fast total blockage of a sensor with the features of independent claim 1.

For this purpose, a method for detecting fast total blockage of a sensor is provided. Information concerning the numbers targets and objects detected by the sensor, the number of objects created, and the number of objects lost within the detection field of the sensor in each detection cycle over a predetermined time window is collected and stored. The time window is split into a first partition, a second partition, and third partition. A first performance indicator based on the number of targets detected in the first partition of the time window, a second performance indicator based on the number of targets detected in the third partition of the time window, and a degradation indicator based on the number of objects lost within the detection field of the sensor during the second partition of the time window, are determined. A fast total blockage event is determined to have happened if the first performance indicator shows detection performance typical, the degradation indicator shows a fast degradation of detection performance, and the second performance indicator shows detection performance untypical for the sensor.

As the method according to the invention does not require complex statistical methods to determine a degradation of the sensor performance, it is capable of reacting quickly to fast total blockage events. This advantageously increases the safety of systems that rely on sensor performance for their functions, e.g. assisted driving systems.

According to a preferred embodiment of the method, the time window is set to 10 seconds. This an advantageous time window to balance both stability of the system and safety in the example of a ground vehicle using the sensor.

According to a further embodiment of the method, the first partition is defined to ensure stability of the method to short term variations in the number of detections. In particular, the first partition can defined as 6 seconds. This an advantageous time window for size of the first partition to balance both stability of the system and safety in the example of a ground vehicle using the sensor.

According to a further embodiment of the method, the second partition is defined to set the time frame over which fast total blockage events are expected. In particular, the second partition can be defined as 1.5 seconds. This an advantageous time window for the size of the second partition to balance both stability of the system and safety in the example of a ground vehicle using the sensor.

According to a further embodiment of the method, the third partition is defined to ensure stability to environment changes. In particular, the third partition can defined as 2.5 seconds. This an advantageous time window for the size of the third partition to balance both stability of the system and safety in the example of a ground vehicle using the sensor.

According to the invention, the first performance indicator is defined as the median number of targets over the detection cycles in the first partition. This is an advantageously simple and quick way to determine the first performance indicator without compromising stability and safety of the method.

Furthermore, the first performance indicator shows detection performance typical for the sensor if the median number of targets is greater than a predetermined number, in particular greater than 50. This an advantageous threshold in the example of a ground vehicle using the sensor.

According to the invention, the second performance indicator is defined as the median number of targets over the detection cycles in the third partition. This is an advantageously simple and quick way to determine the second performance indicator without compromising stability and safety of the method.

Furthermore, the second performance indicator shows detection performance untypical for the sensor if the median number of targets is lower than a predetermined number, in particular lower than 10. This an advantageous threshold in the example of a ground vehicle using the sensor.

According to the invention, the degradation indicator is defined as an object deletion rate. The object deletion rate can be defined as the sum of the object deletion ratio over the detection cycles in the second partition. The object deletion ratio for each detection cycle can be defined as the ratio of the difference between the number of objects deleted in the detection field of the sensor and the number of objects created to the total number of objects. This is an advantageously simple and quick way to determine the degradation performance indicator without compromising stability and safety of the method.

Furthermore, the degradation indicator shows a fast degradation of detection performance if the object deletion rate is higher than a predetermined value, in particular higher than 0.5. This an advantageous threshold in the example of a ground vehicle using the sensor.

According to a further embodiment, the method comprises a step of validating that the fast total blockage event has happened if the second performance indicator shows no recovery of detection performance after a predetermined time, in particular 1 second, has passed and/or a predetermined distance, in particular 10 meters, has been traveled after it has been determined that the fast total blockage event has happened. This way, false positives can be advantageously prevented.

According to an advantageous development, the second performance indicator is defined as the median number of targets over the detection cycles in the third partition and shows no recovery of detection performance if the median number is continuously lower than a predetermined value, in particularly lower than 35, over the predetermined time and/or the predetermined distance. This an advantageous threshold in the example of a ground vehicle using the sensor.

Preferably, a sensor configured to perform the method according to the invention is provided. Furthermore, a vehicle comprising such a sensor can be provided.

The above embodiments and further developments can be combined as desired or useful. Further possible embodiments, further developments and implementations of the invention also comprise combinations of features of the invention described above or below which are not explicitly mentioned. In particular, the person skilled in the art will also add individual aspects as improvements or additions to the respective basic form of the present invention.

### Short description of drawings

The present invention is explained in more detail below with reference to the embodiments shown in the schematic Figures. The following are shown:
Fig. 1 a flow diagram of a method according to an embodiment of the present invention;
Fig. 2 a schematic drawing of a step of collecting and storing information in amethod according to an embodiment of the present invention;
Fig. 3 a schematic drawing of a step of splitting a time window into partitions in a method according to an embodiment of the present invention;
Fig. 4 a schematic drawing of the steps of determining indicators in a method according to an embodiment of the present invention; and
Fig. 5 a schematic drawing of a step of validating a fast total blockage event in a method according to an embodiment of the present invention.

The accompanying figures are intended to provide a further understanding of embodiments of the invention. They illustrate embodiments and, in connection with the description, serve to explain principles and concepts of the invention. Other embodiments and many of the advantages mentioned will be apparent with reference to the drawings. The elements of the drawings are not necessarily shown to scale with respect to each other.

In the figures of the drawings, identical elements, features and components with the same function and the same effect are marked with the same reference signs, unless otherwise specified.

### Detailed description of embodiments

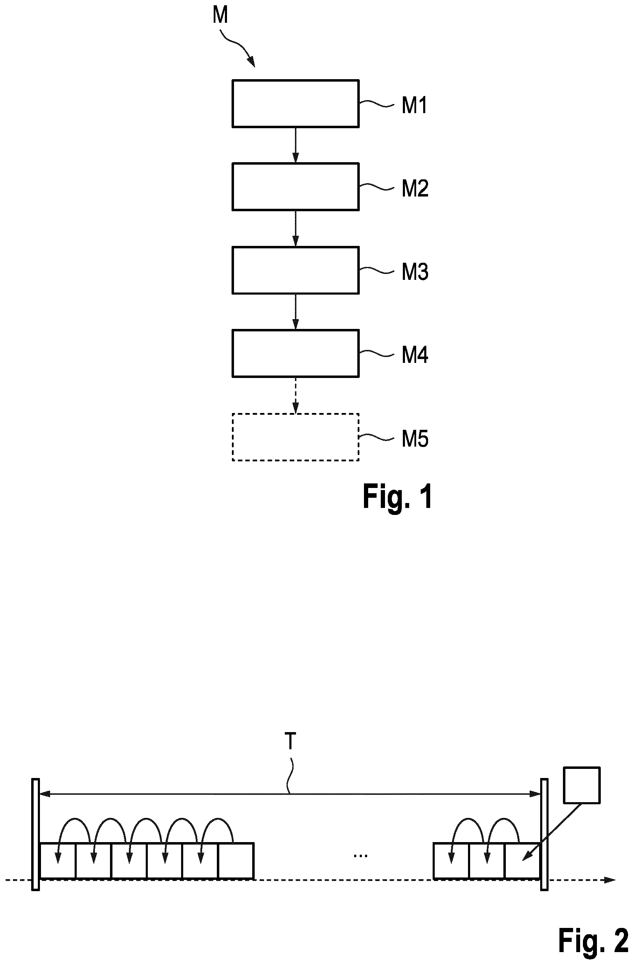

Figure 1 shows a flow diagram for a method for detecting fast total blockage M of a sensor.

In a first step M1, information concerning the numbers of targets and objects detected by the sensor, the number of objects created, and the number of objects lost within the detection field of the sensor in each detection cycle over a predetermined time window is collected and stored.

In a second step M2, the time window is split into a first partition, a second partition, and third partition.

In a third step M3, a first performance indicator based on the number of targets detected in the first partition of the time window, a second performance indicator based on the number of targets detected in the third partition of the time window, and a degradation indicator based on the number of objects lost within the detection field of the sensor during the second partition of the time window, are determined.

In a fourth step M4, a fast total blockage event is determined to have happened if the first performance indicator shows detection performance typical for the sensor, the degradation indicator shows a fast degradation of detection performance, and the second performance indicator shows detection performance untypical for the sensor.

In an optional fifth step M5 a fast total blockage event that happened is validated if the second performance indicator shows no recovery of detection performance after a predetermined time has passed and/or a predetermined distance has been traveled after it has been determined that the fast total blockage event has happened.

In general, the method steps shown in Figure 1 will be performed in a continuous loop, except for the optional step M5, which will only be performed if a fast total blockage event is determined to have happened in step M4. The individual method steps shown in Figure 1 will be explained in more detail in context of the subsequent drawings.

Figure 2 shows an example of how information concerning the numbers of targets and objects detected by the sensor, the number of objects created, and the number of objects lost within the detection field of the sensor in each detection cycle over a predetermined time window can be collected and stored in a method according to the embodiment shown in Figure 1.

Figure 2 shows how over a time window T, the pertinent information is stored for each detection cycle the sensor performs within time window T. How many detection cycles are stored at any given time will depend on both the length of the time window T, and the rate at which the sensor performs detections. In a preferred embodiment the time window can be set to 10 seconds. A typical radar sensor can for example perform a detection sweep approximately every 70ms, leading to information for 140 detection cycles to be stored at any given time. At each detection cycle, first the information stored from the preceding detection cycle will be moved one step to the left in the storage array, i.e. each storage slot corresponding to a detection cycle will be overwritten with the information for the next most recent detection cycle. Then the information for the newest detection cycle will be stored in the corresponding storage slot.

The following data is collected for each detection cycle and kept in the data history: the number of valid targets in each detection cycle, the number of valid objects in each radar cycle, fulfilling additional validation criteria, the number of new objects created in each radar cycle, fulfilling additional validation criteria, and the number of objects deleted inside the radar field of view (FOV) in each radar cycle, fulfilling additional validation criteria.

Objects are radar targets with a tracking history. This way, it is known when an object is created, when the object is deleted and if the object is measured or predicted in the current radar cycle.

Other information about targets and objects might be collected, for different customize implementations of the method.

The additional criteria for object validation refer to the following object properties. The objects shall be directly exposed to the detection system. Objects which are overlapped are discarded, as they have a higher probability to be naturally lost inside the detection field. Objects shall have an extrapolated range bigger than the maximum sensor detection range. Objects which have a higher probability to be deleted inside the detection field due to the loss of power within the sensor range or due to the azimuth decay are discarded.

All objects which are new, measured, predicted or deleted, and which fulfill the additional object validity criteria are counted, resulting the number of valid objects in each radar cycle.

All objects which are new and fulfill the additional validation criteria are counted, resulting the number of valid new objects in each radar cycle.

All objects which are deleted and fulfill the additional validation criteria, are supplementary checked if they are deleted inside the detection field, based on last object position information. The number of objects deleted inside the detection field is determined. An object is considered to be deleted inside the FOV if the object range when deleted is between minimum 0 and maximum range limit of the radar system and if the object azimuth and elevation angle when the object is deleted are, in absolute value, smaller than the detection field azimuth and elevation angles.

Based on this array of stored information concerning the numbers of targets and objects detected by the sensor, the number of objects created, and the number of objects lost within the detection field of the sensor for each of the detection cycles associated with the time window T, the subsequent method steps can be performed.

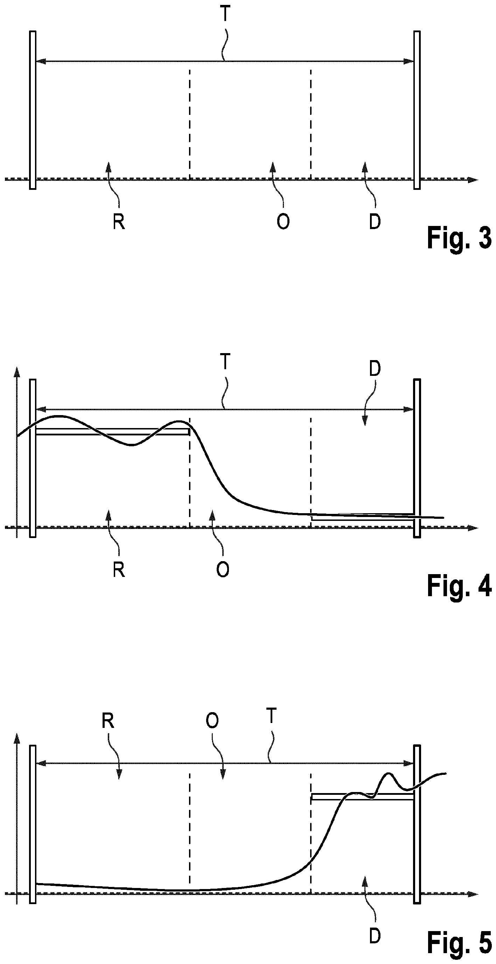

Figure 3 shows an example of how the time window can be split into a first partition, a second partition, and third partition in a method according to the embodiment shown in Figure 1.

The time window T is split into three partitions. During a fast total blockage event, the three partitions will map on data before, while and after the event happened. First partition R will correspond to information from the sensor before the event has happened. Second partition O will correspond to information from the sensor while

the event has happened. Third partition D will correspond to information from the sensor after the event has happened.

The size of each of the three partitions over the time window T is calibrated depending on the demands for stability and time reaction to fast total blockage events. The size of first partition R will determine the stability of the algorithm to short term variations in the number of detections, i.e. the stability against change in the environment structure. The size of second partition O will control the maximum time span for a fast total blockage event, i.e. define what fast means. The size of third partition D will control the stability to environment changes and also the delay for fast total blockage event detection.

In a preferred embodiment, the time window T is split into three partitions R, O and D, with the following definitions. First partition R is defined on the oldest 84 radar cycles in time window T, equivalent to 6 seconds. Third partition D is defined on the newest 35 radar cycles in time window T, equivalent to 2.5 seconds. Second partition O is defined on the remaining 21 radar cycles between first partition R and third partition D, equivalent to 1.5 seconds.

Based on this preferred parametrization the method will be able to report the total blockage, if a fast blockage event happens, with a maximum delay of 4 seconds since the event happens, i.e. equal to size of second partition O and the size of the third partition D. The method will guarantee the detection of a total blockage event in case the blockage occurs in max 1.5 seconds, i.e. the size of second partition O. The method will become available after 10 seconds since ignition, i.e. equal to the size of time window T.

Figure 4 shows an example of how a first performance indicator, a second performance indicator, and a degradation indicator can be determined in a method according to the embodiment shown in Figure 1.

In this embodiment, the data from each partition is processed by a different monitor, to extract relevant information for the method.

The monitor for first partition R determines a first performance indicator for the detection performance of the radar system before the total blockage event has happened. In this embodiment, the first performance indicator is the median number of detections over the detection cycles in partition R.

The monitor for third partition D determines a second performance indicator for the detection performance of the radar system after the total blockage event has happened. In this embodiment, the second performance indicator is the median number of detections over the detection cycles in partition D.

The monitor for second partition O determines a degradation indicator for the fast degradation of the radar detection performance. In this embodiment, this indicator is defined as a rate between the number of objects deleted inside the detection field and the number of newly created objects. Typically, when the radar system is not blocked, the detected objects are consistently tracked in the detection field and are deleted outside the detection field border. Also, objects are constantly created each radar cycle. When a fast total blockage occurs, the objects which are tracked at that moment are all lost inside the detection field and not at the border. Also, no new objects are further created, as the sensor is fully blocked.

This way, an object deletion ratio in the detection field can be defiend for each radar cycle as a ratio of the difference between the number of objects deleted in the detection field of the sensor and the number of objects created to the total number of objects. Typically, the object deletion ratio will be negative or around zero, meaning the number of objects deleted inside the detection field is much smaller than the number of new objects, as typically the objects are deleted outside the detection field. In case of a fast total blockage event, the ratio will be positive, meaning the objects are deleted where not expected, i.e. inside the detection field, and no new objects are created.

The an object deletion rate can be determined for the second partition O as the sum of the object deletion ratios over all detection cycles associated with second partition O.

In a preferred embodiment, the typical number of detections in any environment is above 50, based on the used radar system. In case of total blockage events, the number of detections is less than 10. Typically, object deletion rate is negative or varies around zero. In case of fast total blockage events, the object deletion rate will have values close to 1.

In this preferred embodiment, the following activation conditions for the determination of fast blockage events can be defined. A fast blockage event will be determined to have happened if the median number of targets over the detection cycles associated with first partition R is higher than 50, if the median number of targets over the detection cycles associated with third partition D is lower than 10, and if the object deletion rate associated with second partition O is higher than 0.5.

Figure 5 shows an example of how a fast total blockage event that happened can be validated in a method according to the embodiment shown in Figure 1.

This step can be performed to avoid false positives due to short loss in sensor detection performance, e.g. due to inconsistent target tracking in case of bumps on a road, e.g. all targets lost on top of a high slope. For this purpose, the fast blockage event is qualified over time and distance. The detection of the fast total blockage event is validated if number of detections in third partition D do not recover over a predetermined time and/or a predetermined traveled distance QD

In this preferred embodiment, the fast total blockage event is validated if the median number of targets over the detection cycles associated with third partition D is continuously lower than 35 over a period of 1 second and/or over a traveled distance of 10 meters.

In principle, the parameters used for validating a fast total blockage event can also be used to determine that a total blockage has been resolved and the sensor once again operates at typical performance. In that case, the method step M5 can be performed in a continuous loop after a fast total blockage vent has been detected in step M4 until the point where the second performance indicator shows recovery of detection performance, e.g. once the median number of targets within third partition D is once again higher than 35.

The above embodiments have been presented in the context of a typical ground vehicle. However, the present invention can also be utilized for other use cases, where a fast total blockage event of a sensor needs to be detected. In other use cases, various parameters of the present method can be chosen accordingly.

In particular, different definitions for the time window T and the split into partitions R, O and D can be applied. Different performance monitors can be applied on partitions R and D. Different object validation criteria can be applied on partition O. Multiple validation criteria can be applied to drop inconsistent radar detections.

### List of Reference Signs

- M: method for detecting fast total blockage
- M1: step of collecting and storing information
- M2: step of splitting time window into partitions
- M3: step of determining performance and degradation indicators
- M4: step of determining fast total blockage event
- M5: step of validating fast total blockage event
- T: time window
- R: first partition
- O: second partition
- D: third partition

## Claims

1. Method for detecting fast total blockage (M) of a sensor, comprising the steps of:
collecting and storing information (M1) concerning the numbers of targets and objects detected by the sensor, the number of objects created, and the number of objects lost within the detection field of the sensor in each detection cycle over a predetermined time window (T);
splitting (M2) the time window (T) into a first partition (R), a second partition (O), and third partition (D);
determining (M3) a first performance indicator based on the number of targets detected in the first partition (R) of the time window (T), wherein the first performance indicator is defined as the median number of targets over the detection cycles in the first partition (R); a second performance indicator based on the number of targets detected in the third partition (D) of the time window (T), wherein the second performance indicator is defined as the median number of targets over the detection cycles in the third partition (D); and a degradation indicator based on the number of objects lost within the detection field of the sensor during the second partition (O) of the time window (T), wherein the degradation indicator is defined as an object deletion rate which is defined as the sum of the object deletion ratios over the detection cycles in the second partition (O), wherein the object deletion ratio for each detection cycle is defined as the ratio of the difference between the number of objects deleted in the detection field of the sensor and the number of objects created to the total number of objects; and
determining (M4) that a fast total blockage event has happened if the first performance indicator shows detection performance typical for the sensor if the median number of targets is greater than a predetermined number, the degradation indicator shows a fast degradation of detection performance if the object deletion rate is higher than a predetermined value, and the second performance indicator shows detection performance untypical for the sensor if the median number of targets is lower than a predetermined number.

2. Method (M) according to claim 1,
wherein the time window (T) is set to 10 seconds.

3. Method (M) according to any one of claim 1 or claim 2,
wherein the first partition (R) is defined to ensure stability of the method to short term variations in the number of detections, in particular wherein the first partition (R) is defined as 6 seconds.

4. Method (M) according to any one of the preceding claims,
wherein the second partition (O) is defined to set the time frame over which fast total blockage events are expected, in particular wherein the second partition (O) is defined as 1.5 seconds.

5. Method (M) according to any one of the preceding claims,
wherein the third partition (D) is defined to ensure stability to environment changes, in particular wherein the third partition (D) is defined as 2.5 seconds.

6. Method (M) according to any one of the preceding claims,
wherein the first performance indicator shows detection performance typical for the sensor if the median number of targets is greater than 50.

7. Method (M) according to any one of the preceding claims,
wherein the second performance indicator shows detection performance untypical for the sensor if the median number of targets is lower than 10.

8. Method (M) according to any one of the preceding claims,
wherein the degradation indicator shows a fast degradation of detection performance if the object deletion rate is higher than 0.5.

9. Method (M) according to any one of the preceding claims, further comprising the step of
validating (M5) that the fast total blockage event has happened if the second performance indicator shows no recovery of detection performance after a predetermined time, in particular 1 second, has passed and/or a predetermined distance, in particular 10 meters, has been traveled after it has been determined that the fast total blockage event has happened.

10. Method (M) according to claim 9,
wherein the second performance indicator is defined as the median number of targets over the detection cycles in the third partition (D) and shows no recovery of detection performance if the median number is continuously lower than a predetermined value, in particularly lower than 35, over the predetermined time and/or the predetermined distance.

11. Sensor configured to perform the method (M) according to any one of the preceding claims.

12. Vehicle comprising a sensor according to claim 11.

## Patentansprüche

1. Verfahren zum Detektieren einer schnellen Totalblockierung (M) eines Sensors, das die folgenden Schritte aufweist:
Sammeln und Speichern (M1) von Informationen, die die Anzahl von durch den Sensor detektierten Zielen und Objekten, die Anzahl von erzeugten Objekten und die Anzahl von innerhalb des Detektionsfeldes des Sensors verlorenen Objekten in jedem Detektionszyklus über ein vorgegebenes Zeitfenster (T) betreffen;
Aufteilen (M2) des Zeitfensters (T) in eine erste Partition (R), eine zweite Partition (O) und eine dritte Partition (D);
Bestimmen (M3) eines ersten Leistungsindikators anhand der Anzahl von Zielen, die in der ersten Partition (R) des Zeitfensters (T) detektiert werden, wobei der erste Leistungsindikator als die durchschnittliche Anzahl von Zielen über die Detektionszyklen in der ersten Partition (R) definiert ist; eines zweiten Leistungsindikators anhand der Anzahl von Zielen, die in der dritten Partition (D) des Zeitfensters (T) detektiert werden, wobei der zweite Leistungsindikator als die durchschnittliche Anzahl von Zielen über die Detektionszyklen in der dritten Partition (D) definiert ist; und eines Verschlechterungsindikators anhand der innerhalb des Detektionsfeldes des Sensors während der zweiten Partition (O) des Zeitfensters (T) verlorenen Objekte, wobei der Verschlechterungsindikator als eine Objektlöschrate definiert ist, die als die Summe der Objektlöschverhältnisse über die Detektionszyklen in der zweiten Partition (O) definiert ist, wobei das Objektlöschverhältnis für jeden Detektionszyklus als das Verhältnis des Unterschieds zwischen der Anzahl von in dem Detektionsfeld des Sensors gelöschten Objekten und der Anzahl der erzeugten Objekte zu der Gesamtanzahl von Objekten definiert ist; und
Bestimmen (M4), dass ein schnelles Blockierereignis aufgetreten ist, wenn der erste Leistungsindikator eine Detektionsleistung zeigt, die für den Sensor typisch ist, wenn die durchschnittliche Anzahl von Zielen größer als eine vorgegebene Anzahl ist, wobei der Verschlechterungsindikator eine schnelle Verschlechterung einer Detektionsleistung zeigt, wenn die Objektlöschrate höher als ein vorgegebener Wert ist, und der zweite Leistungsindikator eine Detektionsleistung zeigt, die für den Sensor untypisch ist, wenn die durchschnittliche Anzahl von Zielen niedriger als eine vorgegebene Anzahl ist.

2. Verfahren (M) nach Anspruch 1,
wobei das Zeitfenster (T) auf 10 Sekunden eingestellt ist.

3. Verfahren (M) nach einem des Anspruchs 1 oder Anspruchs 2,
wobei die erste Partition (R) definiert ist, um eine Stabilität des Verfahrens in Bezug auf Kurzzeitvariationen in der Anzahl von Detektionen zu gewährleisten, wobei insbesondere die erste Partition (R) als 6 Sekunden definiert ist.

4. Verfahren (M) nach einem der vorhergehenden Ansprüche,
wobei die zweite Partition (O) definiert ist, um den Zeitrahmen einzustellen, über den schnelle Totalblockierereignisse erwartet werden, wobei insbesondere die zweite Partition (O) als 1,5 Sekunden definiert ist.

5. Verfahren (M) nach einem der vorhergehenden Ansprüche,
wobei die dritte Partition (D) definiert ist, um eine Stabilität in Bezug auf Umgebungsänderungen zu gewährleisten, wobei insbesondere die dritte Partition (D) als 2,5 Sekunden definiert ist.

6. Verfahren (M) nach einem der vorhergehenden Ansprüche,
wobei der erste Leistungsindikator eine Detektionsleistung zeigt, die für den Sensor typisch ist, wenn die durchschnittliche Anzahl von Zielen größer als 50 ist.

7. Verfahren (M) nach einem der vorhergehenden Ansprüche,
wobei der zweite Leistungsindikator eine Detektionsleistung zeigt, die für den Sensor untypisch ist, wenn die durchschnittliche Anzahl von Zielen niedriger als 10 ist.

8. Verfahren (M) nach einem der vorhergehenden Ansprüche,
wobei der Verschlechterungsindikator eine schnelle Verschlechterung einer Detektionsleistung zeigt, wenn die Objektlöschrate höher als 0,5 ist.

9. Verfahren (M) nach einem der vorhergehenden Ansprüche, das ferner den folgenden Schritt aufweist:
Validieren (M5), dass das schnelle Totalblockierereignis aufgetreten ist, wenn der zweite Leistungsindikator keine Erholung der Detektionsleistung nach einer vorgegebenen Zeit zeigt, insbesondere 1 Sekunde vergangen ist und/oder eine vorgegebene Strecke, insbesondere 10 Meter, zurückgelegt wurde, nachdem bestimmt wurde, dass das schnelle Totalblockierereignis aufgetreten ist.

10. Verfahren (M) nach Anspruch 9,
wobei der zweite Leistungsindikator als die durchschnittliche Anzahl von Zielen über die Detektionszyklen in der dritten Partition (D) definiert ist und keine Erholung der Detektionsleistung zeigt, wenn die durchschnittliche Anzahl durchgängig kleiner als ein vorgegebener Wert, insbesondere kleiner als 35, über die vorgegebene Zeit und/oder über die vorgegebene Strecke ist.

11. Sensor, der ausgebildet ist, das Verfahren (M) nach einem der vorhergehenden Ansprüche auszuführen.

12. Fahrzeug, das einen Sensor nach Anspruch 11 aufweist.

## Revendications

1. Procédé de détection d'un blocage total rapide (M) d'un capteur, comprenant les étapes suivantes :
collecte et stockage d'informations (M1) concernant les nombres de cibles et d'objets détectés par le capteur, le nombre d'objets créés, et le nombre d'objets perdus au sein du champ de détection du capteur dans chaque cycle de détection sur une fenêtre temporelle (T) prédéterminée ;
division (M2) de la fenêtre temporelle (T) en une première partition (R), une deuxième partition (O), et une troisième partition (D) ;
détermination (M3) d'un premier indicateur de performance sur la base du nombre de cibles détectées dans la première partition (R) de la fenêtre temporelle (T), le premier indicateur de performance étant défini comme le nombre médian de cibles sur les cycles de détection dans la première partition (R) ; d'un deuxième indicateur de performance sur la base du nombre de cibles détectées dans la troisième partition (D) de la fenêtre temporelle (T), le deuxième indicateur de performance étant défini comme le nombre médian de cibles sur les cycles de détection dans la troisième partition (D) ; et d'un indicateur de dégradation sur la base du nombre d'objets perdus au sein du champ de détection du capteur durant la deuxième partition (O) de la fenêtre temporelle (T), l'indicateur de dégradation étant défini comme un taux de suppression d'objets qui est défini comme la somme des rapports de suppression d'objets sur les cycles de détection dans la deuxième partition (O), le rapport de suppression d'objets pour chaque cycle de détection étant défini comme le rapport de la différence entre le nombre d'objets supprimés dans le champ de détection du capteur et le nombre d'objets créés sur le nombre total d'objets ; et
détermination (M4) qu'un événement de blocage total rapide s'est produit si le premier indicateur de performance fait état d'une performance de détection typique pour le capteur si le nombre médian de cibles est supérieur à un nombre prédéterminé, l'indicateur de dégradation fait état d'une dégradation rapide de la performance de détection si le taux de suppression d'objets est supérieur à une valeur prédéterminée, et le deuxième indicateur de performance fait état d'une performance de détection atypique pour le capteur si le nombre médian de cibles est inférieur à un nombre prédéterminé.

2. Procédé (M) selon la revendication 1,
la fenêtre temporelle (T) étant fixée à 10 secondes.

3. Procédé (M) selon l'une quelconque des revendications 1 ou 2,
la première partition (R) étant définie pour garantir la stabilité du procédé vis-à-vis de variations à court terme du nombre de détections, en particulier la première partition (R) étant définie à 6 secondes.

4. Procédé (M) selon l'une quelconque des revendications précédentes,
la deuxième partition (O) étant définie de manière à fixer le laps de temps sur lequel des événements de blocage total rapide sont attendus, en particulier la deuxième partition (O) étant définie à 1,5 seconde.

5. Procédé (M) selon l'une quelconque des revendications précédentes,
la troisième partition (D) étant définie pour garantir la stabilité vis-à-vis de changements environnementaux, en particulier la troisième partition (D) étant définie à 2,5 secondes.

6. Procédé (M) selon l'une quelconque des revendications précédentes,
le premier indicateur de performance faisant étant d'une performance de détection typique pour le capteur si le nombre médian de cibles est supérieur à 50.

7. Procédé (M) selon l'une quelconque des revendications précédentes,
le deuxième indicateur de performance faisant état d'une performance de détection atypique pour le capteur si le nombre médian de cibles est supérieur à 10.

8. Procédé (M) selon l'une quelconque des revendications précédentes, l'indicateur de dégradation faisant état d'une dégradation rapide de la performance de détection si le taux de suppression d'objets est supérieur à 0,5.

9. Procédé (M) selon l'une quelconque des revendications précédentes, comprenant en outre l'étape suivante :
validation (M5) que l'événement de blocage total rapide s'est produit si le deuxième indicateur de performance fait état de l'absence d'un rétablissement de la performance de détection après qu'un temps prédéterminé, en particulier 1 seconde, s'est écoulé et/ou après qu'une distance prédéterminée, en particulier 10 mètres, a été parcourue après qu'il a été déterminé que l'événement de blocage total rapide s'est produit.

10. Procédé (M) selon la revendication 9,
le deuxième indicateur de performance étant défini comme le nombre moyen de cibles sur les cycles de détection dans la troisième partition (D) et faisant état de l'absence d'un rétablissement de la performance de détection si le nombre moyen est continûment inférieur à une valeur prédéterminée, en particulier inférieur à 35, sur le laps de temps prédéterminé et/ou la distance prédéterminée.

11. Capteur configuré pour réaliser le procédé (M) selon l'une quelconque des revendications précédentes.

12. Véhicule comprenant un capteur selon la revendication 11.
